**Europäisches Patentamt**

**European Patent Office**

**Office européen des brevets**

(11) Numéro de publication : **0 100 704**
**B1**

## (12) FASCICULE DE BREVET EUROPÉEN

(45) Date de publication du fascicule du brevet :
**26.03.86**

(21) Numéro de dépôt : **83401393.0**

(22) Date de dépôt : **06.07.83**

(51) Int. Cl.⁴ : **H 04 M 11/08, H 04 N 7/14**

(54) Réseau de vidéocommunication entre des terminaux visiophoniques et une banque d'images.

(30) Priorité : **30.07.82 FR 8213419**

(43) Date de publication de la demande :
**15.02.84 Bulletin 84/07**

(45) Mention de la délivrance du brevet :
**26.03.86 Bulletin 86/13**

(84) Etats contractants désignés :
**DE GB IT NL SE**

(56) Documents cités :
**EP-A- 0 029 246**
**SID INTERNATIONAL SYMPOSIUM, DIGEST OF TECHNICAL PAPERS**, édition 1, mai 1982, pages 22-23, ROBIN-CHAMPIGNEUL et al.: "The french video-phone set"
**TELCOM REPORT**, vol. 3, no. 2, april 1980, pages 117-121, München, DE P. KLEIN et al.: "Bildkommunikation mit VICOSET 200"

(73) Titulaire : **Poirier, Alain**
**82, rue de la République**
**F-92190 Meudon (FR)**

(72) Inventeur : **Poirier, Alain**
**82, rue de la République**
**F-92190 Meudon (FR)**

(74) Mandataire : **Martinet & Lapoux**
**62, rue des Mathurins**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un réseau de vidéocommunication entre des terminaux visiophoniques et une banque d'images. Chaque terminal visiophonique comprend des moyens reliés à travers des premiers moyens de commutation à un canal téléphonique bidirectionnel pour émettre et recevoir des signaux à audiofréquences, des moyens reliés à un canal d'émission à large bande et à un canal de réception à large bande pour émettre et recevoir des signaux à vidéofréquences et des moyens reliés à travers lesdits premiers moyens de commutation au canal téléphonique pour émettre et recevoir des signaux de données. La banque d'images comprend des moyens reliés sélectivement à travers des seconds moyens de commutation à l'un de plusieurs canaux téléphoniques bidirectionnels pour émettre et recevoir des signaux de données et des moyens reliés sélectivement à travers des troisièmes moyens de commutation à l'un de plusieurs canaux à large bande pour émettre des signaux de vision.

Dans de tels réseaux connus, après établissement de la vidéocommunication entre un terminal visiophonique d'abonné et la banque d'images par échanges de signaux de données en conformité avec un protocole vidéotex à travers des canaux ou lignes téléphoniques, une chaîne de communication à large bande relie à travers des matrices de commutation à large bande du réseau, les moyens d'émission des signaux de vision de la banque d'images aux moyens de réception des signaux à vidéofréquences du terminal. Pendant la durée de la vidéocommunication, qui est généralement très longue, la ligne téléphonique du terminal visiophonique est reliée à celle correspondante de la banque d'images, en vue d'échanger éventuellement des données, notamment pour sélectionner des programmes enregistrés dans la banque d'images.

Dans ces conditions, l'abonné ne peut pas utiliser normalement sa ligne téléphonique pour dialoguer sous forme sonore avec un autre correspondant.

Par ailleurs, les signaux de vision incluant des signaux vidéos composites et des signaux de son émis par la banque d'images sont acheminés par le réseau visiophonique du réseau, ce qui peut provoquer un encombrement du trafic initialement prévu pour des communications purement visiophoniques, la durée de la vidéocommunication avec la banque d'images étant très longue.

L'invention a pour but principal de fournir un réseau de vidéocommunication entre des terminaux visiophoniques et une banque d'images qui permet d'établir une communication purement téléphonique entre deux terminaux au cours d'une vidéocommunication entre l'un de ses terminaux et la banque d'images. En d'autres termes, après l'établissement de la vidéocommunication entre le terminal visiophonique et la banque d'images à travers les moyens téléphoniques du réseau, la ligne téléphonique locale assignée au terminal visiophonique est automatiquement libérée tandis qu'uniquement la ligne à large bande locale assignée au terminal visiophonique est occupée pour échanger des signaux de vision et des signaux de données avec la banque d'images à travers des moyens de commutation à large bande du réseau.

A cette fin, l'invention a pour objet un réseau de vidéocommunication tel que défini dans la revendication 1.

Après l'échange protocolaire d'établissement de la vidéocommunication par canaux téléphoniques et libération automatique de ceux-ci, l'abonné peut dialoguer avec la banque d'images sous forme de signaux de données, en même temps qu'un signal de vision est transmis. Les données sont alors visualisées sur l'écran du tube cathodique du visiophone en même temps que les images animées du programme demandé, par un procédé d'incrustation d'images.

Avantageusement, la largeur de bande du canal à large bande transmettant des signaux de vision — signal vidéo composite + signal son — n'est pas modifiée pour transmettre simultanément les signaux de données. Ceux-ci sont en effet insérés sous forme de paquets de données numériques dans des lignes libres — telles que celles du signal de synchronisation de trame — du signal vidéo composite du signal de vision. Suivant l'autre sens de transmission, du terminal vers la banque d'images, le canal « à large bande » peut être un canal téléphonique supportant les données sous forme de signaux modulés dans une bande à audiofréquences, c'est-à-dire classiquement dans la bande téléphonique 0,3 à 3,4 ou 4 kHz.

Selon un mode de réalisation préféré de l'invention, le trafic occasionné par les communications entre les terminaux visiophoniques et la banque d'images ne sature pas les matrices de commutation à large bande du réseau destinées aux communications purement visiophoniques entre les terminaux. L'invention ne fait pas appel à des matrices à large bande sans blocage, car trop onéreuses. Elle adjoint dans chaque central ou autocommutateur, une seconde matrice à large bande qui est destinée à acheminer uniquement les vidéocommunications entre les terminaux et la banque d'images.

D'autres caractéristiques et avantages de la présente invention apparaîtront plus clairement à la lecture de la description suivante de plusieurs modes de réalisation en référence aux dessins annexés correspondants, dans lesquels :

la Figure 1 est un bloc-diagramme schématique du central de commutation téléphonique et à large bande rattaché à un terminal visiophonique ;

la Figure 2 est un bloc-diagramme détaillé d'un terminal visiophonique selon l'invention ;

la Figure 3 est un bloc-diagramme schématique de la banque d'images selon l'invention ;

la Figure 4 est un bloc-diagramme schématique du central de commutation téléphonique et à large bande rattaché à la banque d'images, selon un premier mode de réalisation ;

la Figure 5 est un bloc-diagramme schématique du central de commutation téléphonique et à large bande rattaché à la banque d'images, selon un second mode de réalisation ; et

la Figure 6 est un bloc-diagramme détaillé de la chaîne de communication à travers le réseau selon le second mode de réalisation, entre un terminal visiophonique et la banque d'images.

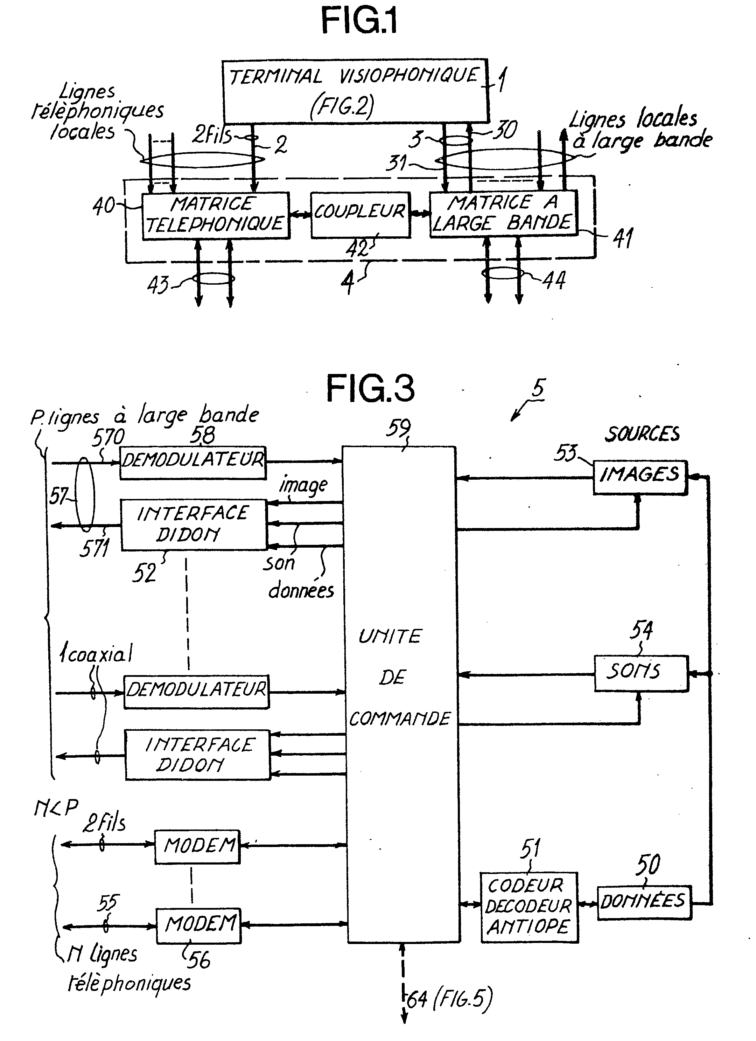

Comme montré schématiquement à la Fig. 1, le terminal visiophonique d'abonné 1 selon l'invention est raccordé à travers une ligne téléphonique 2 et une ligne à large bande 3 au central de rattachement 4 du terminal.

La ligne téléphonique 2 est bidirectionnelle et composée de deux fils. Elle transite des signaux à audiofréquence qui sont échangés entre les moyens d'émission et de réception à audiofréquences du terminal 1 et la matrice de commutation téléphonique 40 du central 4. D'une manière générale, la ligne 2 émet et reçoit à travers le réseau commuté des signaux à audiofréquences, tels que des signaux de parole échangés entre deux abonnés téléphoniques ou visiophoniques, ou tels que des signaux modulés de données échangés entre l'abonné visiophonique et une banque de données ou d'images.

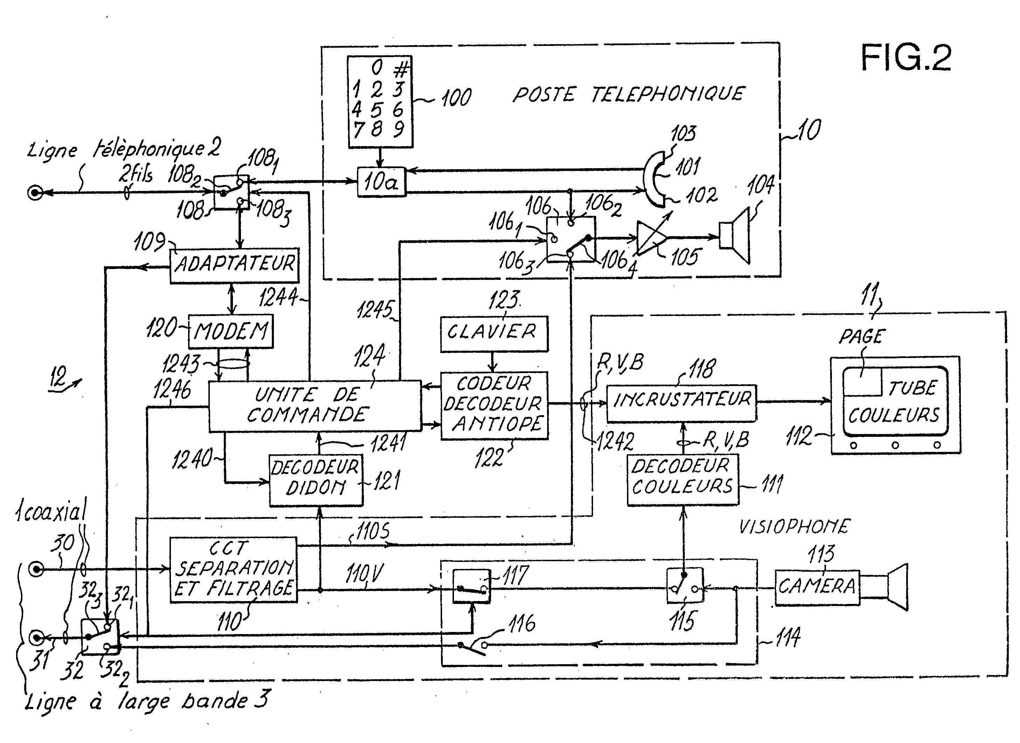

Comme montré à la Fig. 2, les moyens d'émission et de réception à audiofréquences du terminal 1 sont schématisés dans leur ensemble par un poste téléphonique d'abonné classique 10 à écoute amplifiée. Le poste 10 comprend un clavier de numérotation 100, un combiné 101 à écouteur 102 et microphone 103, un haut-parleur 104 pour l'écoute amplifiée par un amplificateur à gain ajustable 105, ainsi qu'un circuit de commutation 10a raccordant classiquement la ligne téléphonique 2 aux organes 102, 103 et 105.

La ligne à large bande 3 est composée d'une ligne entrante unidirectionnelle 30 à large bande et d'une ligne sortante unidirectionnelle 31 à large bande. Les lignes 30 et 31 transitent des signaux de vision qui sont échangés entre les moyens d'émission et de réception à vidéofréquences du terminal 1 et la matrice de commutation à large bande 41 du central 4 montré à la Fig. 1. Un signal de vision est composé du mélange classique d'un signal vidéo composite d'images et d'un signal son selon le standard de télévision en couleurs adopté pour les terminaux visiophoniques et la banque d'images. Le signal vidéo composite est composé de trois signaux primaires classiques qui sont par exemple le signal de luminance Y et les deux signaux de chrominance ou dits de différence de couleurs R-Y et B-Y ou qui sont, d'une manière générale, assignés à trois coordonnées colorimétriques se déduisant des composantes primaires rouge R, verte V et bleue B applicables à un tube de télévision en couleurs.

Dans les moyens d'émission et de réception à vidéofréquences 11 du terminal 1 montré à la Fig. 2, on retrouve classiquement un circuit de séparation et de filtrage 110, un décodeur 111 du signal vidéo composite, un tube cathodique de télévision en couleurs 112 — ces derniers organes étant analogues à ceux inclus dans un récepteur de télévision classique — ainsi qu'une caméra de télévision en couleurs 113 et un circuit de commutation analogique 114. Le terminal peut comprendre accessoirement un ou plusieurs moniteurs vidéo (non représentés) permettant de visualiser des images de plus grandes dimensions que celles du tube cathodique 112.

Le circuit 110 reçoit de la ligne entrante 30 le signal de vision analogique provenant soit d'un terminal visiophonique, soit de la banque d'images, et le démultiplexe en le signal son sur un fil 110S et le signal vidéo composite sur un fil 110V. Le fil 110S est relié au contact stationnaire $106_3$ d'un commutateur 106 à deux positions avec position intermédiaire $106_1$, dont l'autre contact stationnaire $106_2$ est relié au fil d'écoute du poste 10 raccordé à l'écouteur 102. Le contact mobile $106_4$ du commutateur 106 est relié à l'entrée de l'amplificateur 105. Le basculement du contact mobile $106_4$ entre les contacts $106_2$ et $106_1$ permet à l'abonné d'écouter son correspondant soit secrètement par l'écouteur 102, soit avec d'autres personnes par le haut-parleur 104, comme il est connu. La connexion des contacts $106_3$ et $106_4$ déconnecte le haut-parleur 104 de l'écouteur 102 et permet de recevoir le son du programme transmis par la banque d'images.

Le fil 110V, l'entrée du décodeur 111, la sortie vidéo de la caméra 113 et la ligne sortante à large bande 31 sont reliés au circuit de commutation 114. Ce dernier circuit comprend classiquement un commutateur à deux positions 115 dont le contact mobile est relié à l'entrée du décodeur 111 et dont les deux contacts fixes sont reliés respectivement à la sortie vidéo du circuit de séparation et de filtrage 110 via le fil 110V et à la sortie de la caméra 113. Au moyen du commutateur 115, l'abonné sélectionne soit l'image de son correspondant ou celle transmise par la banque d'images, soit la sienne propre en circuit fermé. Le circuit 114 comprend classiquement un interrupteur 116 entre la sortie de la caméra 113 et la ligne sortante 31. L'ouverture de l'interrupteur 116 inhibe la transmission de l'image de l'abonné lorsque celui-ci ne désire pas la transmettre à son correspondant. Le circuit 114 comprend encore un autre interrupteur 117 qui est inséré en série sur le fil 110V et qui inhibe la visualisation de l'image du correspondant.

Le terminal visiophonique 1 comprend également des moyens d'émission et de réception 12 de signaux de données. Avant de détailler les relations de ces moyens 12 entre eux avec les moyens 10 et 11, on stipule ci-après les principales caractéristiques relatives à la transmission de ces signaux de données.

Les signaux de données sont ceux qui sont nécessaires à l'échange d'informations entre le terminal visiophonique 1 et la banque d'images pour que l'abonné dialogue avec la banque d'images soit pour sélectionner un programme de son choix enregistré dans la banque d'images, soit pour utiliser la banque d'images comme terminal de dialogue interactif tel qu'un terminal informatique. Cette sélection s'effectue en accord avec un protocole vidéotex (vidéographie interactive) particulier ou connu dont les signaux permettent notamment les différentes connexions et déconnexions d'organes du terminal selon l'invention. Les signaux de données selon l'invention sont transmis pour partie à travers la ligne téléphonique 2 et pour partie à travers les lignes à large bande 30 et 31.

La transmission des signaux dans les lignes 2 et 31 est effectuée par l'intermédiaire d'un modem standard 120 (modulateur-démodulateur). Le modem 120 opère à deux fréquences moyennes nominales différentes respectivement pour les deux sens de transmission et opère en mode duplex sur la ligne téléphonique 2. Comme il est connu, la modulation est une modulation série bivalente obtenue par déplacement de fréquence. Pour chaque sens de transmission, les deux états binaires correspondent à deux fréquences caractéristiques dont la demi-somme est égale à la fréquence nominale correspondante.

Le signal de données transmis sur la ligne entrante 30 est en mode vidéotex proprement dit, c'est-à-dire qu'il peut être transmis simultanément avec le signal de vision entrant à visualiser sur le tube cathodique 112. Selon un mode de réalisation préféré, le mode de transmission des données sur la ligne 30 est conforme aux normes du système de DIffusion de DONnées français DIDON (marque déposée), et le codage vidéotex fait appel à celui du système d'Acquisition Numérique et Télévisualisation d'Images Organisées en Pages d'Ecritures dit ANTIOPE (marque déposée). Les caractéristiques de ces systèmes sont rappelées brièvement en référence notamment aux deux numéros spéciaux de la revue « Radiodiffusion-Télévision », l'un intitulé « DIDON : DIFFUSION DE DONNEES PAR PAQUETS. ETAT DE LA TECHNIQUE », par BLINEAU Joseph, DUBLET Guy, NOIREL Yves et VARDO Jean-Claude, décembre 1980, Paris (FR), et l'autre intitulé « DIDON-ANTIOPE. Spécifications techniques », février 1982, Paris (FR).

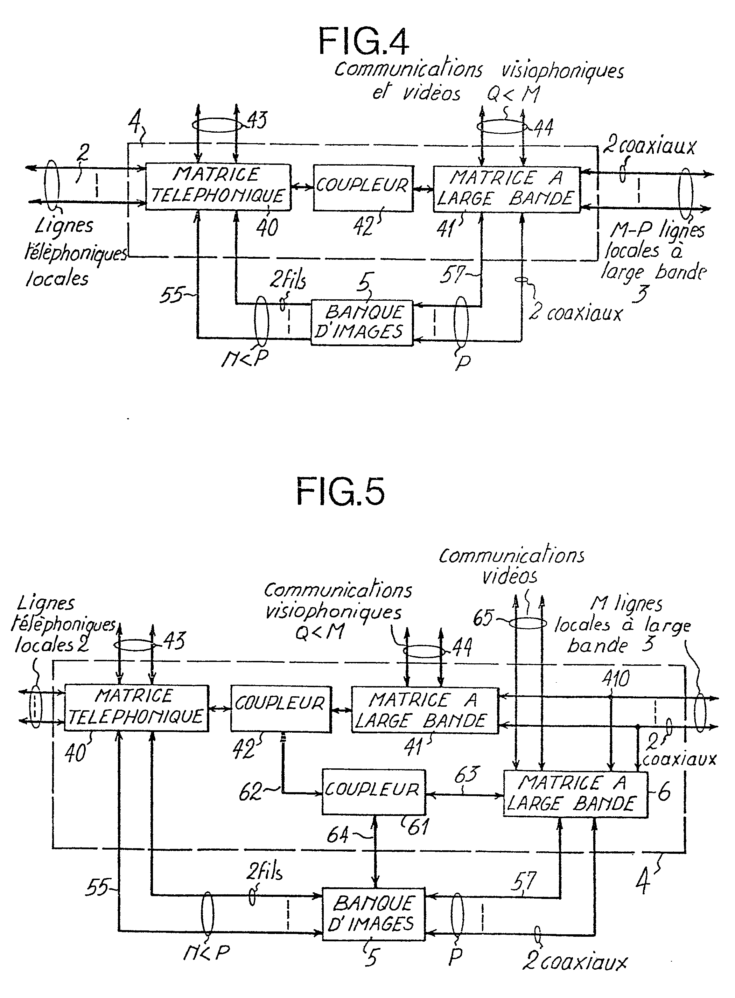

La banque d'images 5 montrée à la Fig. 3 comprend une source de données 50 qui émet des pages d'écritures sous la forme de suites d'octets dans une ou généralement plusieurs voies numériques. Chaque suite d'octets est découpée en bloc de données auquel est ajouté un en-tête pour constituer un paquet dans un codeur du type ANTIOPE 51. L'en-tête comprend, en outre, un mot d'identification de voie numérique qui est le même pour tous les paquets provenant d'une même voie numérique.

Un codeur DIDON 52 reçoit les différentes voies numériques et le signal de vision sélectionné dans une source d'images et sons 53, 54. Il multiplexe les voies numériques paquet par paquet en insérant les paquets à raison d'un paquet par partie active de ligne libre du signal vidéo composite transmis. Une ligne libre est une ligne dont la partie active n'est pas occupée par le signal d'image proprement dit, ce qui est le cas des lignes de l'intervalle de synchronisation en trame. Cependant, lorsqu'un programme n'est pas transmis, la plupart des autres lignes peuvent être occupées par des paquets, ce qui correspond à l'utilisation plein canal. Ainsi, après multiplexage des voies numériques, le codeur DIDON multiplexe les paquets de données avec le signal de vision, c'est-à-dire module le signal de luminance des lignes libres par les paquets. Un tel signal multiplex, vision + données, est alors reçu sur la ligne à large bande 30.

En se reportant à nouveau à la Fig. 2, les moyens d'émission et de réception des signaux de données numériques 12 du terminal visiophonique 1 comprennent principalement, outre le modem 120, un décodeur DIDON 121, un codeur-décodeur du type ANTIOPE 122 associé à un clavier spécialisé correspondant 123, ainsi qu'une unité de commande 124.

Le décodeur DIDON 121 reçoit le signal vidéo composite mélangé aux signaux de données via le fil de sortie 110V du circuit de séparation et de filtrage 110. Le décodeur 121 a pour fonction essentielle d'extraire — au moyen de son démodulateur — les voies numériques de données du signal vidéo composite entrant pour les délivrer en série sous forme numérique, et de sélectionner — au moyen de son démultiplexeur — parmi les paquets reçus, les paquets d'une voie numérique. L'adresse de la voie numérique sélectionnée est transmise par l'unité de commande 124 au décodeur 121, via un fil 1240. Cette adresse est comparée pour chaque paquet reçu validé aux mots d'identification de voie afin que le décodeur 121 fournisse à l'unité 124 via un bus 1241 uniquement les blocs de données de la voie numérique sélectionnée. Ces blocs de données sont alors traités dans le décodeur 122 qui décode chaque caractère du message vidéographique reçu sous forme numérique en des signaux vidéo du standard adopté propre à être visualisé par le tube cathodique 112, vis un bus vidéo 1242.

L'unité de commande 124 est organisée autour d'un microprocesseur. Elle est également reliée au modem 120 à travers un bus bidirectionnel 1243. La gestion du protocole vidéotex et notamment les différentes connexions et déconnexions selon l'invention entre des organes du terminal 1 sont gérées par l'unité 124. On décrit maintenant l'établissement d'une liaison entre le terminal 1 et la banque d'images 5 ainsi que les moyens de commutation spécifiques à l'invention dans le terminal 1.

L'appel par l'abonné de la banque d'images 5 s'effectue au moyen du clavier 123. Celui-ci, pour obtenir la prise de la ligne téléphonique 2 par le modem 120, frappe sur une touche particulière du clavier 123, ce qui met également sous tension les moyens 11 et 12. L'unité de commande 124 commande le basculement d'un commutateur à deux positions 108. Le contact mobile $108_2$ du commutateur 108 est initialement relié à la ligne téléphonique 2 et à l'un $108_1$ de ses contacts

stationnaires relié au circuit 10a du poste 10. Le basculement provoque la déconnexion du poste téléphonique 10 de la ligne 2 et la connexion du contact mobile $108_2$ avec l'autre contact stationnaire $108_3$ du commutateur 108 qui est relié au modem 120 via un adaptateur d'impédance 109. L'abonné numérote le numéro d'appel de la banque d'images sur le clavier 123 et le modem 120 est alors en relation avec la banque d'images 5 après que son central de rattachement ait sélectionné l'une de ses lignes téléphoniques de rattachement 55, comme on le verra dans la suite.

Quand le modem 56 (Fig. 3) de la banque d'images a reconnu l'appel émis par le central 4, il décroche automatiquement la ligne 55 et envoie un signal de retour à une première audiofréquence prédéterminée. La détection de celle-ci est signalée par le démodulateur du modem 120 à l'unité 124. Après l'échange de plusieurs signaux de contrôle propre au protocole vidéotex et notamment la transmission d'un mot d'identité de l'abonné par l'unité 124 vers la banque d'images, l'unité 124 ordonne l'émission d'un signal à une seconde audiofréquence prédéterminée par le modulateur du modem 120. Cette seconde porteuse est interprétée comme un signal « prêt à recevoir » par le modem 56 de la banque d'images. La banque d'images 5 est alors en état de transmettre les données nécessaires à l'abonné et de dialoguer avec celui-ci.

La banque d'images 5 envoie alors via son modem 56 une première page d'écriture en langage vidéotex du type ANTIOPE qui est reçue par la ligne téléphonique 2 et le modem 120 et est décodée par le décodeur 122 pour être visualisée sur le tube cathodique 112. Le canal vidéo d'entrée du tube 112 est relié non seulement à la sortie du décodeur de couleurs 111 mais également à la sortie du décodeur 122 à travers un dispositif d'incrustation d'images de télévision en couleurs connu 118.

La première page d'écriture indique à l'abonné que le terminal 1 est bien en relation avec la banque d'images et que sa ligne téléphonique 2 va être bientôt libérée pour l'utiliser normalement selon l'invention.

Après une temporisation prédéterminée, la banque d'images 5 émet une seconde page d'écriture qui est transmise par l'intermédiaire des moyens à large bande du réseau et reçue à travers la ligne entrante 30, le circuit 110 et le décodeur DIDON 121, par l'unité 124. Cette page d'écriture est visualisée sur l'écran du tube 112. Elle peut être superposée sur une image animée et visualisée en incrustation grâce au dispositif 118. Ce dispositif 118 est un incrustateur comprenant des circuits de commutation à gain variable ou à vitesse rapide de commutation variable. Ils permettent de combiner les signaux composants R, V, B de l'image dite d'avant-scène représentant une page d'écriture délivrée par la sortie 1242 du décodeur 122 et les signaux composants R, V, B de l'image dite d'arrière-scène représentant une image animée délivrée par la sortie du décodeur 111 en des signaux composants R, V, B d'une image résultant de l'incrustation de l'image d'avant-scène dans l'image d'arrière-scène. L'incrustateur 118 permet de visualiser des caractères notamment dans un coin de l'écran du tube 112. Le dispositif 118 peut être analogue à celui décrit dans la demande de brevet EP-A-0 014 665 déposée le 8 février 1980 au nom de Etablissement Public Télédiffusion de France (FR).

La détection du mot d'identification de la voie numérique supportant la seconde page d'écriture ou bien de la présence du signal de synchronisation de ligne par l'unité 124 et le décodeur 121, provoque la libération de la ligne téléphonique 2 et la connexion de cette ligne 2 au poste 10 qui est restée à l'état raccroché. Cette opération est effectuée par l'unité 124 qui commande, via des fils 1244, 1245 et 1246, les basculements des commutateurs 106, 108, 117 déjà cités et d'un autre 32. Le commutateur 32 est un commutateur à deux positions dont le contact mobile $32_3$ relié à la ligne sortante à large bande 31 est appliqué sur l'un, $32_2$, de ses contacts stationnaires relié à l'interrupteur 116 lorsque le terminal est en communication visiophonique. Dans le cas présent, le contact $32_3$ bascule pour venir s'appliquer contre l'autre contact stationnaire $32_1$ du commutateur 32 afin de déconnecter la caméra 113 de la ligne 31 et de connecter cette ligne 31 au modem 120 via l'adaptateur 109. Cet adaptateur 109 est destiné à adapter d'une part, la ligne bidirectionnelle à deux fils 2 au modem 120 et d'autre part, la ligne coaxiale unidirectionnelle 31 au modulateur du modem 120.

La détection de la seconde page d'écriture provoque également les basculements des commutateurs 108 et 106. Le contact mobile $108_2$ vient s'appliquer contre le contact stationnaire $108_1$ pour relier la ligne téléphonique 2 au poste 10. Le contact mobile $106_4$ vient s'appliquer contre le contact $106_3$ pour relier le fil de sortie son 110S du circuit 110 au haut-parleur 104 via l'amplificateur 105.

La banque d'images 5 libère sa ligne téléphonique 55 précédemment sélectionnée après la transmission de la seconde page d'écriture, ce qui indique à la matrice de commutation téléphonique de son central de rattachement que la communication téléphonique est rompue.

La visualisation de la seconde page d'écriture peut signaler à l'abonné qu'il peut de nouveau se servir de son poste téléphonique 10 pour dialoguer sous forme sonore avec un autre abonné à poste simple ou à terminal visiophonique ; dans ce dernier cas, les images des locuteurs ne sont pas transmises puisque l'une des lignes à large bande 3 des abonnés est occupée par un signal d'image. La seconde page visualise par exemple les différents programmes que la banque d'images est susceptible de fournir ainsi que leur numéro de code. L'abonné dialogue en mode vidéotex avec la banque d'images au moyen de son clavier spécialisé 123. Le modem 120 émet pendant toute la durée de la vidéocommunication soit les caractères numériques transmis par le codeur 122, soit une fréquence porteuse par exemple à la fréquence nominale correspondant à ce sens de transmission en l'absence de tout dialogue, sur la ligne sortante à large bande 31. Par contre, le signal de vision mélangé éventuellement aux voies numériques DIDON est envoyé par la banque d'images vers l'abonné sur une ligne à large bande sortante sélectionnée 571 de la banque d'images et sur la ligne entrante à large bande 30 du terminal. Des pages d'écriture sont visualisées à travers l'incrustateur 118 par exemple dans l'un des coins de l'écran du tube cathodique 112.

La visualisation de ces pages est commandée soit directement par l'abonné, par exemple pour sélectionner un autre programme, soit directement par la banque d'images, par exemple pour indiquer la fin prochaine d'un programme.

La banque d'images surveille pendant toute la durée de la communication la présence de la fréquence porteuse susdite qui indique que l'abonné est toujours désireux d'être en communication avec la banque d'images. La fin de la vidéocommunication peut être provoquée par l'abonné au moyen de la frappe d'une touche particulière sur son clavier 123. Cette opération est traduite par l'unité 124 pour supprimer l'émission de la fréquence porteuse par le modulateur du modem 120 du terminal. A ce stade, les commutateurs 106, 117 et 32 reviennent au repos, c'est-à-dire à l'état inverse de celui illustré à la Fig. 2, et les moyens 11 et 12 sont déconnectés de l'alimentation. L'absence de cette porteuse est détectée par le démodulateur 58 de la ligne à large bande entrante correspondante 570 de la banque d'images 5 qui après temporisation, libère définitivement l'ensemble de la chaîne de communication à large bande. Cette libération peut être réalisée par envoi d'informations modulées par la source de données 50 de la banque d'images vers son central de rattachement qui réachemine une information équivalente vers les autres centraux à large bande de la chaîne de communication. La libération peut être également réalisée par la détection de l'absence du signal vidéo, notamment du signal de synchronisation de ligne, dans les matrices de commutation à large bande de la chaîne de communication, l'absence de signal vidéo étant commandée en réponse à la détection de l'absence de la fréquence porteuse émise par le modulateur 120 du terminal visiophonique 1 ou par arrêt du programme émis par la banque d'images.

Cependant, la fin de la vidéocommunication peut être provoquée par la banque d'images 5, par exemple par l'absence du signal de vision et donc du signal de synchronisation de ligne, ou bien par l'absence du mot d'identification d'une voie numérique déterminée DIDON, laquelle absence est détectée par le décodeur 121 et l'unité 124.

Dans le processus précédent de l'établissement de la vidéocommunication entre le terminal visiophonique 1 et la banque d'images 5, il a été supposé qu'une première page d'écriture est d'abord envoyée sur la ligne téléphonique et qu'une seconde page d'écriture est envoyée sur la ligne à large bande. Selon une autre variante, la première page d'écriture peut être supprimée, la « seconde » page provoquant encore la libération de la ligne téléphonique.

Si la banque d'images 5 est inaccessible pour cause d'occupation de ses lignes à large bande 57 la desservant, elle transmet alors à l'abonné demandeur une seconde page vidéotex sur sa ligne téléphonique sélectionnée 55. Cette seconde page indique l'état actuel de la banque d'images et des instructions à l'abonné. Celles-ci permettent à l'abonné, au moyen de son clavier spécialisé 123 et à travers le modem 120 et la ligne téléphonique 2, de demander par exemple un accès différé aux programmes de la banque d'images à une heure prédéterminée à laquelle la banque d'images rappellera l'abonné par l'intermédiaire des lignes téléphoniques et en transmettant une nouvelle page d'écriture.

Une chaîne de communication téléphonique et à large bande est décrite ci-après. Cette chaîne est composée d'un ou de plusieurs centraux téléphoniques et à large bande tel que celui 4 desservant un terminal visiophonique 1 montré à la Fig. 1 ou desservant la banque d'images 5 montré à la Fig. 4. Chaque central 4 comprend une matrice de commutation de lignes téléphoniques 40, une matrice de commutation de lignes à large bande 41 et un dispositif à base de microprocesseurs appelé coupleur 42. La matrice téléphonique 40 dessert des lignes téléphoniques locales d'abonné telles que 2 et/ou 55, ainsi que des liaisons bidirectionnelles téléphoniques 43 avec d'autres matrices téléphoniques. La matrice à large bande 41 dessert des lignes à large bande locales d'abonné telles que 3 et/ou 57, ainsi que des liaisons à large bande 44 avec d'autres matrices à large bande. Les liaisons intercentraux 43 et 44 peuvent être des lignes simples supportant chacune une communication ou des lignes à large bande dans lesquelles des canaux mélangés en fréquence sont respectivement assignés aux communications en cours. Une matrice à large bande peut être analogue à une grille de commutation vidéo à grande capacité utilisée dans un studio de télévision telle que celle décrite dans l'Article de C. SURJON, Revue Technique THOMSON-CSF, Vol. 12, N° 4, pages 867 à 881, décembre 1980.

Le coupleur 42 a pour rôle de faire correspondre à une chaîne de communication téléphonique une chaîne de communication visiophonique à large bande, ou à une ligne téléphonique d'abonné la ligne à large bande d'abonné associée. En d'autres termes, la matrice à large bande 41 est esclave de la matrice téléphonique 40 et est activée pour une communication visiophonique dès que la communication téléphonique correspondante est établie dans la matrice téléphonique 40. Egalement, comme il est connu, dès que la communication téléphonique est rompue, la matrice 40 ordonne, via le coupleur 42, la rupture de la communication visiophonique dans la matrice 41.

La banque d'images 5 est desservie par N lignes téléphoniques 55 et par P lignes à large bande 57. Sachant que la durée d'occupation d'une ligne téléphonique 55 — jusqu'à la transmission de la seconde page d'écriture — est très inférieure à celle d'une ligne à large bande 57, généralement celle du programme —, N peut être très inférieur à P. Selon l'invention, pour les vidéocommunications avec la banque d'images 5, la matrice à large bande 41 reste activée tant qu'elle n'a pas détecté un ordre de déconnexion qui est propre à une communication avec la banque d'images 5 et qui est indépendant de l'ordre de déconnexion émanant de la matrice téléphonique pour une communication visiophonique.

L'invention propose deux modes de réalisation pour raccorder les P lignes à large bande 57 au central de rattachement de la banque d'images 5, les N lignes téléphoniques 55 étant toujours raccordées à la matrice téléphonique 40 de ce central.

Selon le premier mode de réalisation illustré à la Fig. 4, les P lignes à large bande 57 sont raccordées directement à la matrice à large bande 41. M-P lignes à large bande d'abonné 3 sont également raccordées aux terminaux visiophoniques des abonnés locaux. Les ordres spécifiques de maintien, connexion et d'occupation ou analogues des points de connexion de la matrice à large bande 41 sont transmis de la matrice 40 au coupleur 42 dont le logiciel est profondément modifié. Par contre, l'ordre de déconnexion de deux chemins de commutation dans la matrice 41 pour une vidéocommunication avec la banque d'images 5 est détecté par la matrice 41 et le coupleur 42, lors de l'absence de la porteuse émanant du modem 120 du terminal de l'abonné ou lors, par exemple, de l'absence du signal de synchronisation de ligne émanant de la banque d'images. Chaque fois qu'une vidéocommunication émanant d'un abonné externe est établie avec une ligne téléphonique 55 de la banque d'images, le coupleur 42 doit affecter à la vidéocommunication un canal à large bande sur la liaison 44, plusieurs communications téléphoniques sur une même ligne 55 à des instants différents pouvant donner lieu à autant d'occupation de canaux vidéo sur la liaison 44 et de lignes à large bande 57. Ces occupations restreignent donc le nombre de communications purement visiophoniques entre les abonnés locaux et les abonnés distants.

Chaque fois que les P lignes à large bande 57 sont simultanément occupées, ces occupations restreignent le nombre de communications purement visiophoniques au sein de la matrice à large bande 41.

Par exemple, si Q désigne le nombre maximal de canaux vidéo sur la liaison 44, c'est-à-dire le nombre maximal de communications purement visiophoniques que pouvait transiter initialement la matrice 41, avec $Q < M$, cette matrice ne peut commuter qu'au plus $Q + (M — P) — P$ communications purement visiophoniques si les P lignes à large bande 57 sont occupées simultanément pour des vidéocommunications avec la banque d'images 5. Dans ce cas, au sein de la matrice à large bande 41 peut se présenter des difficultés d'écoulement des communications purement visiophoniques du fait de la durée très longue des vidéocommunications avec la banque d'images.

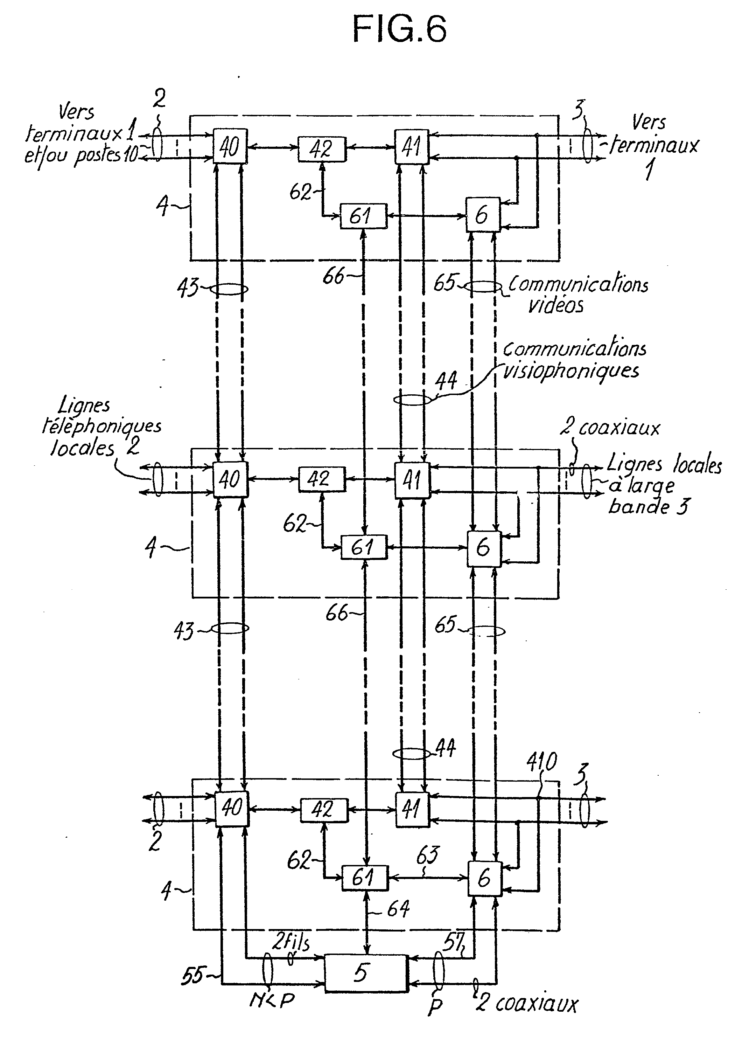

Le second mode de réalisation montré à la Fig. 5 remédie à cet inconvénient. Les lignes à large bande 57 de la banque d'images 5 sont raccordées à une matrice supplémentaire à large bande 6 qui est également reliée aux M lignes à large bande 3 des abonnés locaux raccordées, comme selon la Fig. 4, à la matrice à large bande 41. Chaque ligne à large bande d'abonné 3 est reliée aux matrices 41 et 6 à travers deux adaptateurs d'impédance 410. Dans ce cas, un coupleur additionnel 61 est également prévu et est chargé des connexions et déconnexions dans la matrice supplémentaire 6. Les informations concernant l'établissement des communications à large bande sont fournies au coupleur 61 par la matrice 40 et/ou le coupleur 42 — dont le logiciel n'est pas modifié ici — via un bus 62 ; les informations concernant la rupture des communications à large bande sont fournies au coupleur 61, soit par la matrice 6 via un bus 63, soit par la banque d'images elle-même, via un bus 64.

L'avantage de ce second mode de réalisation est que l'adjonction de la matrice 6 — sous-dimensionnée par rapport à la matrice 41 — ne perturbe pas le trafic purement visiophonique initialement prévu dans la matrice 41 lorsque la banque d'images 5 est raccordée au réseau existant. En effet, seules les communications visiophoniques provenant des lignes à large bande des lignes locales 3 et de la liaison 44 sont commutées dans la matrice locale 41. Le trafic de ces communications visiophoniques n'est point perturbé par celui entre les abonnés locaux et la banque d'images 5 ou entre la banque d'images et une liaison à large bande bidirectionnelle 65 qui transite les signaux vidéo entre la matrice locale 6 et celles des autres centraux. En effet, pour une communication entre la banque d'images 5 et une ligne d'abonné 3, les signaux passent directement à travers la matrice supplémentaire 6 ; dans ce cas, le coupleur 61 affecte un chemin de vidéocommunication dans la matrice 6 pour la communication vidéo tandis qu'un chemin de vidéocommunication dans la matrice 41 est laissé libre pour une communication visiophonique entre deux autres abonnés. Réciproquement, lorsqu'une ligne 3 transite une communication visiophonique, un chemin de vidéocommunication dans la matrice 6 est laissé libre pour une communication entre la banque d'images 5 et un autre abonné, soit local via une ligne locale 3, soit distant via la liaison 65.

Le mode de réalisation selon la Fig. 5 présente l'avantage que le nombre de lignes 57 qui peuvent desservir la banque d'images, est supérieur à celui prévu à la Fig. 4, l'augmentation du nombre de lignes 57 pouvant s'effectuer par apport de modules à large bande constituant la matrice 6 sans pour cela modifier le trafic et la capacité visiophoniques initialement prévus dans le central 4.

La Fig. 6 représente une chaîne de communication à large bande entre le central de rattachement de la banque d'images 5, tel que montré à la Fig. 5 et le central de rattachement d'un terminal visiophonique 1 à travers plusieurs centraux. Chaque central 4 comprend un coupleur supplémentaire 61 et une matrice supplémentaire 6, comme ceux montrés à la Fig. 5. Les secondes matrices 6 sont destinées uniquement aux vidéocommunications avec la banque d'images 5. Des liaisons 66, par exemple à canaux sémaphores, relient les coupleurs supplémentaires 61 des centraux. Elles permettent de transmettre d'un bout à l'autre de la chaîne d'une vidéocommunication, notamment les ordres de connexion, déconnexion et d'occupation des chemins de commutation dans les matrices à large bande 6.

La libération de la chaîne de la vidéocommunication peut s'effectuer selon plusieurs procédés en fonction de l'extrémité, terminal ou banque d'images, qui rompt la première la vidéocommunication :

a) l'abonné raccroche en premier, l'émission de la porteuse nominale dans le terminal 1 est supprimée puis l'absence de la porteuse est détectée,

a1) dans les matrices à large bande 6 des centraux, ce qui provoque la libération des chemins de vidéocommunication correspondants dans les matrices 6, ou

a2) dans la banque d'images 5, ce qui provoque l'une des étapes suivantes b1) et b2) ;

b) la banque d'images prend l'initiative de la rupture de la vidéocommunication, puis

b1) elle envoie sur le bus 64 un ordre de fin de communication au coupleur supplémentaire local 61 auquel est reliée la banque d'images 5 et qui retransmet cet ordre aux autres coupleurs 61 via les liaisons 66, ce qui libère les chemins de vidéocommunication correspondants dans les matrices 6, ou

b2) l'arrêt de la transmission d'images par la banque 5 permet dans chaque matrice 6, par des moyens de détection prévus à cet effet, de détecter l'absence du signal de vision, par exemple l'absence du signal de synchronisation de lignes ; les moyens de détection commandent ensuite la libération des chemins de vidéocommunication correspondants dans les matrices 6 de la chaîne ; pour cette dernière solution, le bus 64 peut être supprimé.

On notera qu'une matrice de commutation à large bande 6 peut être décomposée en deux sous-matrices, l'une affectée aux transmissions de signaux de vision et de données entre les codeurs DIDON 52 et les décodeurs DIDON 121 et l'autre affectée aux signaux de données entre les modulateurs 120 et les démodulateurs 58, la largeur de bande pour cette dernière direction de transmission pouvant être plus faible.

En se référant de nouveau au bloc-diagramme schématique de la Fig. 3, on décrit plus en détail la banque d'images 5. Celle-ci est organisée d'une manière analogue aux banques de données connues utilisées pour transmettre des programmes organisés en pages d'écritures de vidéotex. La banque 5 est raccordée à son central local 4 (Fig. 4 ou 5) par N lignes téléphoniques 55 et P lignes à large bande 57 composées chacune de deux coaxiaux, avec $N < P$ · A chaque ligne téléphonique 55 est relié un modem 56. Chaque ligne à large bande 57 est composée d'une ligne coaxiale entrante 570 qui est reliée à un démodulateur 58 et d'une ligne coaxiale sortante 571 qui est reliée à une interface d'adaptation vidéo 52 permettant de mélanger le signal son avec le signal vidéo composite en un signal de vision et de mélanger le signal de données sortant avec le signal de vision selon la norme DIDON.

La banque d'images 5 comprend également des sources d'images 53 — telles que des bandes vidéo ayant enregistré des programmes — et des sources de sons 54 pour partie en relation avec et pour partie indépendante de source d'images 53, ainsi qu'une source de données 50 munie d'un codeur-décodeur du type ANTIOPE 51.

Ces différentes sources sont reliées aux organes 56, 52 et 58 à travers une unité de commande 59 qui est organisée autour d'un microprocesseur et qui joue le rôle d'aiguilleur entre les différents organes côté lignes et les différents organes côté sources. L'unité 59 supervise notamment la présence de la porteuse nominale émise par le modulateur 120 d'un terminal d'abonné 1 qui peut être reçu soit par une ligne téléphonique 55 et le modulateur du modem associé 56 au cours de l'établissement d'une vidéocommunication, soit par une ligne entrante à large bande 570 et son démodulateur associé 58 pendant la vidéocommunication. L'unité 59 est en étroite relation avec les codeur et décodeur 51 pour notamment superviser la sélection d'une source d'images et de sons 53-54 en fonction de la demande de l'abonné et de la disponibilité des sources.

On a supposé jusqu'à présent que les audiocommunications téléphoniques et vidéocommunications étaient transmises sous forme analogique par deux lignes analogiques telles que 2 et 3 ou 55 et 57. Le procédé d'établissement et de rupture d'une vidéocommunication peut être également effectué à travers des lignes locales et des liaisons bidirectionnelles supportant un multiplex numérique ou en fréquence de canaux. Le support de ces lignes peut être une paire de câbles coaxiaux ou de fibres optiques. Une ligne d'abonné transite au moins un canal pour la parole et au moins un canal pour le signal de vision et données ou purement de données. Dans ce cas, un terminal et la banque d'images comprennent des circuits connus pour la séparation en fréquence ou le démultiplexage numérique des canaux suivant une direction de transmission et d'autres circuits connus pour le mélange en fréquence ou le multiplexage numérique des canaux suivant l'autre direction de transmission.

On notera également que la banque d'images 5 peut être une banque d'images purement statiques telles que des pages de données correspondant au mode de transmission vidéotex, ou une banque d'images animées correspondant au mode de transmission d'un standard de télévision.

Les éléments constitutifs essentiels au réseau selon l'invention, tels que terminal visiophonique 1, banque d'images 5, central 4, pris séparément appartiennent également à l'objet de l'invention.

**Revendications**

1. Réseau de vidéocommunication entre des terminaux visiophoniques et une banque d'images, chaque terminal visiophonique (1) comprenant des moyens (10) reliés à travers des premiers moyens de commutation (108) à un canal téléphonique bidirectionnel (2) pour émettre et recevoir des signaux à audiofréquences, des moyens (11) reliés à un canal d'émission à large bande (31) et à un canal de réception à large bande (30) pour émettre et recevoir des signaux à vidéofréquences et des moyens (120, 122) reliés à travers lesdits premiers moyens de commutation (108) au canal téléphonique (2) pour émettre et recevoir des signaux de données, et la banque d'images (5) comprenant des moyens (50) reliés sélectivement à travers des seconds moyens de commutation (59) à l'un de plusieurs canaux téléphoniques bidirectionnels (55) pour émettre et recevoir des signaux de données et des moyens (53, 54) reliés sélectivement à travers des troisièmes moyens de commutation (59) à l'un de plusieurs canaux à large bande (571) pour émettre des signaux de vision, caractérisé en ce que la banque d'images (5) comprend des moyens de mélange (52) reliés chacun aux seconds et troisièmes moyens de commutation (59) et à un canal bande d'émission (571) pour émettre un second signal de données particulier (seconde page) propre à libérer des canaux téléphoniques (2, 55) puis des troisièmes signaux de données mélangés avec un signal de vision après l'échange de premiers signaux de données à travers lesdits canaux téléphoniques (2, 55) lors de l'établissement d'une vidéocommunication entre un terminal (1) et la banque d'images (5) et des moyens (50) reliés sélectivement à travers les seconds moyens de commutation (59) à l'un de plusieurs canaux à large bande (570) pour recevoir des troisièmes signaux de données après ledit échange des premiers signaux de données, en ce que chaque terminal visiophonique (1) comprend des moyens (121-124) reliés au canal à large bande de réception (30) pour détecter les seconds et troisièmes signaux de données transmis par les moyens de mélange (52) de la banque d'images et pour les délivrer aux moyens de réception de signaux de données (122), des quatrièmes moyens de commutation (32) pour relier le canal à large bande d'émission (31) soit aux moyens d'émission à vidéofréquences (11-113) pour une communication visiophonique avec un autre terminal, soit aux moyens d'émission de données (120, 122) en réponse à la détection du second signal de données (seconde page), et en ce que les premiers moyens de commutation (108) relient les moyens d'émission et de réception de signaux à audiofréquences (10) au canal téléphonique (2) en réponse à la détection dudit second signal de données (seconde page).

2. Réseau conforme à la revendication 1, caractérisé en ce que les moyens de mélange (52) de la banque d'images (5) insèrent les signaux de données sous forme de paquets numériques, à raison d'un paquet dans une ligne libre du signal vidéocomposite du signal de vision.

3. Réseau conforme à la revendication 1 ou 2, caractérisé en ce que dans chaque terminal visiophonique (1), les moyens d'émission et de réception de signaux de données (120, 122) sont reliés aux premiers et quatrièmes moyens de commutation (108, 32) à travers un modem (120) et des moyens d'adaptation d'impédance (109) de ligne bidirectionnelle téléphonique à deux fils (2) et de ligne d'émission à large bande à deux conducteurs (31) et en ce que dans la banque d'images (5), chaque canal de réception à large bande (570) est relié directement à un démodulateur (58) pour recevoir des signaux de données provenant d'un terminal visiophonique (1).

4. Réseau conforme à l'une des revendications 1 à 3, caractérisé en ce que chaque terminal visiophonique (1) comprend des moyens d'incrustation vidéo (118) reliés aux moyens de réception des signaux de données (122) et aux moyens de réception des signaux à vidéofréquences (11-111) pour visualiser sur un tube cathodique (112) des images représentatives de données reçues, incrustées dans des images correspondant aux signaux à vidéofréquences reçus.

5. Réseau conforme à l'une des revendications 1 à 4, caractérisé en ce que chaque terminal (1) comprend des moyens (123) indépendants des moyens d'émission et de réception des signaux à audiofréquences (10) pour mettre sous tension les moyens d'émission et de réception des signaux de données et des signaux à vidéofréquences (11, 12) et simultanément pour commander les premiers moyens de commutation (108) afin de relier le canal téléphonique (2) aux moyens d'émission et de réception de données (120, 122).

6. Réseau conforme à l'une des revendications 1 à 5, caractérisé en ce que chaque terminal visiophonique (1) comprend des cinquièmes moyens de commutation (106) pour relier l'entrée (105) d'un haut-parleur à écoute amplifiée (104) soit à une voie de réception de signaux à audiofréquences (110S, 106₄) de moyens de séparation et de filtrage (110) du signal vidéo composite et du signal son d'un signal de vision reçu dans le canal de réception à large bande (30) en réponse à la détection dudit second signal de données reçu (seconde page), soit à une voie de réception à audiofréquences (102, 106₂) inclue dans les moyens d'émission et de réception de signaux à audiofréquence (10) pour une communication visiophonique ou téléphonique.

7. Réseau conforme à l'une des revendications 1 à 6, caractérisé en ce que le nombre (N) de canaux téléphoniques bidirectionnels (55) desservant la banque d'images (5) est inférieur au nombre (P) de canaux bidirectionnels à large bande (57) desservant la banque d'images (5).

8. Réseau conforme à l'une des revendications 1 à 7, comprenant des centraux (4) incluant chacun une matrice de commutation téléphonique maître (40) pour commuter des canaux bidirectionnels téléphoniques locaux (2) entre eux et avec d'autres distants (43) et une matrice de commutation à large bande (41) esclave de la matrice téléphonique (40) pour commuter des canaux bidirectionnels à large bande locaux (3) entre eux et avec d'autres distants (44), caractérisé en ce que les canaux téléphoniques (55) et les canaux à large bande (57) desservant la banque d'images (5) sont reliés directement aux matrices téléphoniques (40) et à large bande (41) du central de rattachement (4, Fig. 4) de la banque d'images (5) respectivement.

9. Réseau conforme à l'une des revendications 1 à 7 comprenant des centraux (4) incluant chacun une matrice de commutation téléphonique maître (40) pour commuter des canaux bidirectionnels téléphoniques locaux (2) entre eux et avec d'autres distants (43) et une matrice de commutation à large bande (41) esclave de la matrice téléphonique (40) pour commuter des canaux bidirectionnels à large bande locaux (3) entre eux et avec d'autres distants (44), caractérisé en ce que les canaux téléphoniques (55) desservant la banque d'images sont reliés directement à la matrice téléphonique (40) du central de rattachement (4, Fig. 5) de la banque d'images (5), en ce que chaque central (4, Fig. 6) autre que celui de rattachement de la banque d'images comprend une seconde matrice de commutation à large bande (6) pour commuter des canaux bidirectionnels à large bande locaux (3) avec des seconds canaux bidirectionnels à large bande distants (65) reliés à d'autres secondes matrices de commutation à large bande (6) uniquement pour des vidéocommunications avec la banque d'images (5), et en ce que le central de rattachement (4, Fig. 5) de la banque d'images (5) comprend une seconde matrice de commutation à large bande (6) pour commuter des canaux bidirectionnels à large bande locaux et distants (3, 65) avec les canaux à large bande (57) desservant la banque d'images (5).

10. Réseau conforme à la revendication 8 ou 9, caractérisé en ce que les moyens d'émission de signaux de données (120, 122) du terminal visiophonique (1) émettent sur le canal à large bande d'émission (31) un signal prédéterminé (fréquence porteuse nominale) pendant toute la durée d'une vidéocommunication avec la banque d'images (5) et en ce que les matrices à large bande (41 ou 6) traversée par ladite vidéocommunication détectent l'absence du signal prédéterminé pour provoquer la libération de la chaîne de canaux à large bande (3, 57, 65) supportant ladite vidéocommunication.

11. Réseau conforme à l'une des revendications 1 à 9, caractérisé en ce que les moyens d'émission de signaux de données (120, 122) du terminal visiophonique (1) émettent sur le canal à large bande d'émission (31) un signal prédéterminé (fréquence porteuse nominale) pendant toute la durée d'une vidéocommunication avec la banque d'images (5) et en ce que la détection de l'absence du signal prédéterminé par les moyens de réception de signaux de données à large bande (58, 50) de la banque d'images provoque la libération de la chaîne de canaux à large bande (3, 57, 44 ou 65) supportant ladite vidéocommunication.

12. Réseau conforme à la revendication 9 ou aux revendications 9 et 11, caractérisé en ce que chaque central (4) comprend des moyens (61) en relation (66) avec ceux des autres centraux pour libérer la chaîne de canaux à large bande dans les secondes matrices à large bande (6) lors de l'émission d'un signal particulier (64) par la banque d'images (5) vers son canal de rattachement (4, 61).

13. Réseau conforme à la revendication 8 ou 9 ou aux revendications 8 et 11 ou 9 et 11, caractérisé en ce que les matrices à large bande (41 ou 6) traversée par une vidéocommunication détectent l'absence d'un signal particulier (signal de synchronisation de ligne) émis par la banque d'images (5) pour provoquer la libération de la chaîne de canaux à large bande (3, 57, 44 ou 65) supportant ladite vidéocommunication.

**Claims**

1. Videocommunication network between videophone terminals and a picture bank, each videophone terminal (1) comprising means (10) connected through first switching means (108) to a bidirectional telephone channel (2) for transmitting and receiving audiofrequency signals, videofrequency means (11) connected to a wideband transmitting channel (31) and a wide-band receiving channel (30) for transmitting and receiving videofrequency signals, and means (120, 122) connected through said first switching means (108) to the telephone channel (2) for transmitting and receiving data signals, and the picture bank (5) comprising means (50) connected selectively through second switching means (59) to one of several bidirectional telephone channels (55) for transmitting and receiving data signals, and means (53, 54) connected selectively through third switching means (59) to one of several wide-band channels for transmitting vision signals, characterized in that the picture bank (5) comprises mixing means (52) each connected to the second and third switching means (59) and to a wide-band transmitting channel (571) for transmitting a second particular data signal (second page) peculiar to releasing telephone channels (2, 55), then third data signals mixed with a vision signal after an exchange of first data signals via said telephone channels (2, 55) when a videocommunication between a visiophone terminal (1) and the picture bank (5) has been established, and means (50) connected selectively through the second switching means (59) to one of several wide-band channels (570) for receiving third data signals after said exchange of the first data signals, in that each videophone terminal (1) comprising means (121-124) connected to the wide-band receiving channel (30) for detecting the second and third data signals transmitted from the picture bank mixing means (52) and for delivering them to the data signal receiving means (122), fourth switching means (32) for connecting the wide-band transmitting channel either to the videofrequency transmitting means (11-113) for a videophone communication with another terminal, or to the data transmitting means (120, 122) in response to the second data signal (second page) being detected, and in that the first switching means (108) connects the audiofrequency signal transmitting and receiving means (10) to the telephone channel (2) in response to said second data signal (second page) being detected.

2. Network according to claim 1, characterized in that the mixing means (52) in the picture bank (5) inserts the data signals in digital packet form, to the extent of one packet in a free line of the composite video signal in the vision signal.

3. Network according to claim 1 or 2, characterized in that in each videophone terminal (1), the data signal transmitting and receiving means (120, 122) are connected to the first and fourth switching means (108, 22) through a modem (120) and a two-wire bidirectional telephone line (2) and two-conductor wide-band transmitting line (31) impedance matching means (109) and in that in the picture bank (5), each wide-band receiving channel (570) is connected directly to a demodulator (58) thereby receiving data signal from a videophone terminal (1).

4. Network according to one of claims 1 to 3, characterized in that each videophone terminal (1) comprises video combining means (118) connected to the data signal receiving means (122) and to the videofrequency signal receiving means (11-111) so as to visualize, through a cathode ray tube (112), pictures representative of received data combined with pictures corresponding to the received videofrequency signals.

5. Network according to one of claims 1 to 4, characterized in that each terminal (1) comprises means (123) independent of the audiofrequency signal transmitting and receiving means (10) for power supplying the data signal and videofrequency signal transmitting and receiving means (11 ; 12) and for simultaneously controlling the first switching means (108) thereby connecting the telephone channel (2) to the data transmitting and receiving means (120, 122).

6. Network according to one of claims 1 to 5, characterized in that each videophone terminal (1) comprises fifth switching means (106) for connecting the input (105) of an amplified-listening loudspeaker (104) either to an audiofrequency signal receiving path (110S, 106$_4$) from means (110) for separating and filtering the composite video signal and the sound signal in a vision signal received in the wide-band receiving channel (30) in response to detection of said received second data signal (second page), or to an audiofrequency receiving path (102, 106$_2$) included in the audiofrequency signal transmitting and receiving means (10) for a videophone or telephone communication.

7. Network according to one of claims 1 to 6, characterized in that the number (N) of the bidirectional telephone channels (55) serving the picture bank (5) is less than the number (P) of the wide-band bidirectional channels (57) serving the picture bank (5).

8. Network according to one of claims 1 to 7, comprising exchanges (4) each including a master telephone switching unit (40) for switching local telephone bidirectional channels (2) therebetween and with other remote ones (43), and a wide-band switching unit (41) acting as a slave to the telephone unit (40) for switching local wide-band bidirectional channels (3) therebetween and with other remote ones (44), characterized in that the telephone channels (55) and the wide-band channels (57) serving the picture bank (5) are directly connected to telephone and wide-band switching units (40, 41) in the exchange (4, Fig. 4) assigned to the picture bank (5) respectively.

9. Network according to one of claims 1 to 7, comprising exchanges (4) each including a master telephone switching unit (40) for switching local telephone bidirectional channels (2) therebetween and with other remote ones (43), and a wide-band switching unit (41) acting as a slave to the telephone unit (40) for switching local wide-band bidirectional channels (3) therebetween and with other remote ones (44), characterized in that the telephone channels (55) serving the picture bank are connected directly to the telephone unit (40) in the exchange (4, Fig. 5) assigned to the picture bank (5), in that each exchange (4, Fig. 6) other than said picture bank exchange comprises a second wide-band switching unit (6) for switching local wide-band bidirectional channels (3) with second remote wide-band bidirectional channels (65) connected to other second wide-band switching units (6) only for videocommunications with the picture bank (5), and in that the picture bank (5) exchange (4, Fig. 5) comprises a second wide-band switching unit (6) for switching local and remote wide-band bidirectional channels (3, 65) with the wide-band channels (57) serving the picture bank (5).

10. Network according to claim 8 or 9, characterized in that the data signal transmitting means (120, 122) in the videophone terminal (1) transmits a predetermined signal (nominal carrier frequency) in the transmitting wide-band channel (31) during the entire length of a videocommunication with the picture bank (5), and in that the wide-band switching units (41 or 6) through which said videocommunication runs detect the absence of the predetermined signal so as to cause release of the wide-band channels (3, 57, 65) carrying said videocommunication.

11. Network according to one of claims 1 to 9, characterized in that the data signal transmitting means (120, 122) in the videophone terminal (1) transmits a predetermined signal (nominal carrier frequency) in the transmitting wide-band channel (31) during the entire length of a videocommunication with the picture bank (5), and in that the detection of the absence of the predetermined signal by the wide-band data signal receiving means (58, 50) in the picture bank causes release of the linked wide-band channels (3, 57, 44 or 65) carrying said videocommunication.

12. Network according to claim 9 or claims 9 and 11, characterized in that each exchange (4) comprises means (61) in relation (66) with those in the other exchanges for releasing all the linked wide-band channels in the second wide-band switching units (6) when a particular signal (64) is transmitted from the picture bank (5) to its assigned exchange (4, 61).

13. Network according to claim 8 or 9 or claims 8 and 11 or 9 and 11, characterized in that the wide-band switching units (41 or 6) through which a videocommunication runs detect the absence of a particular signal (line synchronizing signal) transmitted from the picture bank (5) so as to cause release of the linked wide-band channels (3, 57, 44 or 65) carrying said videocommunication.

### Patentansprüche

1. Videokommunikationsnetz zwischen Bildfernsprechgeräten und einer Bildbank, wobei jedes Bildfernsprechgerät (1) Mittel (10) aufweist, die verbunden sind über erste Umschaltmittel (108) mit einem Zweirichtungs-Telefonkanal (2), um Signale auf Hörfrequenz abzugeben und zu empfangen, Mittel (11), verbunden mit einem Sendekanal großer Frequenzbreite (31) und mit einem Empfangskanal großer Frequenzbreite (30), um Signale auf Videofrequenzen zu senden und zu empfangen, und Mittel (120, 122), die über die genannten ersten Umschaltmittel (108) mit dem Telefonkanal (2) verbunden sind, um Datensignale auszusenden und zu empfangen, und die Bildbank (5) Mittel (50) aufweist, die ausgewählt über zweite Umschaltmittel (59) mit einem von mehreren Zweirichtungs-Telefonkanälen verbunden sind, um Datensignale auszusenden und zu empfangen, und Mittel (53, 54), die ausgewählt über dritte Umschaltmittel (59) mit einem von mehreren Breitbandkanälen (571) verbunden sind, um visuelle Signale auszusenden, dadurch gekennzeichnet, daß die Bildbank (5) Mischungsmittel (52) aufweist, die jeweils mit den zweiten und dritten Umschaltmitteln (59) verbunden sind, und mit einem Kanal großer Sendefrequenzbreite (571), um ein zweites besonderes Datensignal (zweite Seite) zu senden, um die Telefonkanäle (2, 55) zu befreien, dann dritte Datensignale, vermischt mit einem visuellen Signal, nach dem Austausch von ersten Datensignalen über die Telefonkanäle (2, 55) bei einer Ausbildung einer Videokommunikation zwischen einem Gerät (1) und der Bildbank (5) und den Mitteln (50), ausgewählt verbunden über die zweiten Umschaltmittel (59) mit einem von mehreren Kanälen großer Bandbreite (570), um dritte Datensignale zu empfangen, nach dem Austausch der ersten Datensignale, weiter dadurch, daß jedes Bildschirmgerät (1) Mittel (121-124) aufweist, die mit dem Empfangskanal großer Bandbreite (30) verbunden sind, um die zweiten und dritten Datensignale zu erfassen. übermittelt durch die Mischmittel (52) der Bildbank, und um Datensignale (122) den Empfangsmitteln zu übermitteln, vierte Umschaltmittel (32), um den Sendekanal großer Bandbreite (31) sei es mit Sendemitteln auf Videofrequenzen (11-113) für eine Bildfernsprechkommunikation mit einem anderen Gerät zu verbinden, sei es mit Sendemitteln für Daten (120, 122) nach Auftreten der Erfassung des zweiten Datensignals (zweite Seite), und daß die ersten Umschaltmittel (108) die Sendemittel und die Empfangsmittel für die Hörfrequenzsignale (10) mit dem Telefonkanal (2) verbinden, abhängig von der Erfassung des zweiten Datensignals (zweite Seite).

2. Netz nach Anspruch 1, dadurch gekennzeichnet, daß die Mischungsmittel (52) der Bildbank (5) die Datensignale in Form von numerischen Paketen einbringen, aus dem Grund eines Paketes in einer freien Leitung eines visuellen Signals eines videoaufgebauten Signals.

3. Netz nach Anspruch 1 oder 2, dadurch gekennzeichnet, daß in jedem Bildfernsprechendgerät (1) die Mittel zur Sendung und Empfang von Datensignalen (120, 122) verbunden sind mit den ersten und vierten Umschaltmitteln (108, 32) über ein Modem (120) und Mittel zur Angleichung der Impedanz (109) der Zweirichtungs-Telefonleitung mit zwei Elementen (2) und die Sendeleitung mit breitem Frequenzband mit zwei Leitern (31), und dadurch, daß in der Bildbank (5) jeder Empfangskanal mit breitem Frequenzband (570) unmittelbar mit einem Demodulator (58) verbunden ist, um Datensignale von einem Bildfernsprechendgerät zu empfangen.

4. Netz nach einem der Ansprüche 1 bis 3, dadurch gekennzeichnet, daß jedes Bildfernsprechendgerät (1) eingelegte Videomittel (118) aufweist, verbunden mit Empfangsmitteln für Datensignale (122) und Empfangsmitteln für Signale auf Videofrequenzen (11-111) um auf einer Kathodenstrahlröhre (112) Bilder sichtbar zu machen, die den empfangenen Daten entsprechen, eingelegt in entsprechende Bilder von empfangenen Signalen auf Videofrequenzen.

5. Netz nach einem der Ansprüche 1 bis 4, dadurch gekennzeichnet, daß jedes Bildfernsprechendgerät (1) Mittel (123) aufweist unabhängig von Sende- und Empfangsmitteln für Signale auf Hörfrequenzen (10), um die Sende- und Empfangsmittel für Datensignale und Signale auf Videofrequenzen (11, 12) unter Spannung zu setzen und zugleich die ersten Umschaltmittel (108) zu steuern anstatt den Telefonkanal (2) mit Sende- und Empfangsmitteln für Daten (120, 122) zu verbinden.

6. Netz nach einem der Ansprüche 1 bis 5, dadurch gekennzeichnet, daß jedes Bildfernsprechgerät (1) fünfte Umschaltmittel (106) aufweist, um den Eingang (105) eines verstärkten Mithörlautsprechers (104) sei es mit einem Empfangsweg von Hörfrequenzsignalen (110S, 106₄) aus Mitteln der Trennung und der Filterung (110) eines zusammengesetzten Videosignals und eines Tonsignals eines visuellen Signals, das in dem Empfangskanal mit breitem Frequenzband empfangen ist, in Reaktion auf die Erfassung des zweiten Signals der empfangenen Daten (zweite Seite), sei es mit einem Empfangsweg von Hörfrequenzsignalen (102, 106₂) eingeschlossen in den Sende- und Empfangsmitteln für Hörfrequenzsignale (10) für eine audiovisuelle oder telefonische Kommunikation.

7. Netz nach einem der Ansprüche 1 bis 6, dadurch gekennzeichnet, daß die Anzahl (N) der Zweirichtungs-Telefonkanäle (55), die die Bildbank (5) erschließen, kleiner ist als die Anzahl (P) der Zweirichtungs-Kanäle mit großem Frequenzband (57), die die Bildbank (5) erschließen.

8. Netz nach einem der Ansprüche 1 bis 7, aufweisend Zentralen (4), die jeweils eine Haupttelefon-Schaltmatrix aufweisen, um die Zweirichtungs-Telefonkanäle (2) unter sich und mit anderen Weitenfernten (44) zu schalten, dadurch gekennzeichnet, daß die Telefonkanäle (55) und die Kanäle großer Bandbreite (57), die die Bildbank (5) versorgen, unmittelbar mit Telefonmatrizen (40) und einem großen Frequenzband (41) der zentralen Teilnehmerleitung (4, Fig. 4) der Bildbank (5) verbunden sind.

9. Netz nach einem der Ansprüche 1 bis 7, aufweisend Zentralen (4), die jeweils eine Haupttelefonschaltstelle (40) zur Schaltung der örtlichen Zweirichtungs-Telefonkanäle (2) unter sich und mit anderen entfernten (43) aufweisen, und eine Schaltmatrix mit großer Bandbreite (41), abhängig von der Telefonmatrix (40), zum Schalten der Zweirichtungskanäle mit großer Bandbreite (3), unter sich und mit anderen, entfernten (44), dadurch gekennzeichnet, daß die Telefonkanäle (55), die die Bildbank versorgen, unmittelbar mit der Telefonmatrix (40) der zentralen Teilnehmerleitung (4, Fig. 5) der Bildbank (5) verbunden sind, daß jede Zentrale (4, Fig. 6) außer der der Teilnehmerleitung der Bildbank eine zweite Schaltmatrix mit großer Bandbreite (6) aufweist, um die Zweirichtungskanäle mit großer Bandbreite (3) zu schalten, mit zweiten Zweirichtungskanälen großer Bandbreite, die entfernt sind (55), verbunden mit weiteren zweiten Schaltmatrizen großer Bandbreite (6), allein für Videokommunikationen mit der Bildbank (5), und daß die zentrale Teilnehmerleitung (4, Fig. 5) der Bildbank (5) eine zweite Schaltmatrix mit großer Bandbreite (6) aufweist, um die Zweirichtungskanäle großer Bandbreite, örtlich und entfernt (3, 65) mit den Kanälen großer Bandbreite (57) zu verbinden, die die Bildbank (5) versorgen.

10. Netz nach einem der Ansprüche 8 oder 9, dadurch gekennzeichnet, daß die Mittel zur Absendung der Datensignale (120, 122) eines Bildfernsprechgerätes (1) auf dem Sendekanal großer Bandbreite (31) ein vorbestimmtes Signal (nominale Trägerfrequenz) abgeben, während der gesamten Dauer einer Videokommunikation mit der Bildbank (5) und dadurch, daß die Matrizes großer Bandbreite (41 oder 6), durchquert durch die Videokommunikation, die Abwesenheit des vorbestimmten Signales erfassen, um die Befreiung der Kanäle großer Bandbreite (3, 57, 65) hervorzurufen, unterstützend die Videokommunikation.

11. Netz nach einem der Ansprüche 1 bis 9, dadurch gekennzeichnet, daß die Mittel zur Absendung der Datensignale (120, 122) eines Bildfernsprechgerätes (1) auf dem Sendekanal großer Bandbreite (31) ein vorbestimmtes Signal (nominale Trägerfrequenz) abgeben, während der gesamten Dauer einer Videokommunikation mit der Bildbank (5), und daß die Erfassung der Abwesenheit eines vorbestimmten Signals durch die Empfangsmittel für die Datensignale großer Bandbreite (58, 50) der Bildbank eine Befreiung der Kanalkette großer Bandbreite (3, 57, 44 oder 65) hervorrufen, unterstützend die Videokommunikation.

12. Netz nach Anspruch 9 oder nach den Ansprüchen 9 und 11, dadurch gekennzeichnet, daß jede Zentrale (4) Mittel (61) aufweist, in Verbindung (66) mit denen anderer Zentralen, um die Kanalkette großer Bandbreite in den zweiten Matrizen großer Bandbreite (6) zu befreien, bei Abgabe eines bestimmten Signals (64) durch die Bildbank (5) über deren Teilnehmerleitungskanal (4, 61).

13. Netz nach Anspruch 8 oder 9 oder nach den Ansprüchen 8 und 11 oder 9 und 11, dadurch gekennzeichnet, daß die Matrizen großer Bandbreite (41 oder 6), durchsetzt durch eine Videokommunikation, die Abwesenheit eines bestimmten Signales (Synchronisationssignal der Leitung) entdecken, daß durch die Bildbank (5) ausgegeben wird, um eine Befreiung der Kanalkette großer Bandbreite (3, 57, 44 oder 65) hervorzurufen, unterstützend die Videokommunikation.

0 100 704

FIG.1

Lignes téléphoniques locales

TERMINAL VISIOPHONIQUE 1
(FIG.2)

2Fils 2   3 30   31

Lignes locales à large bande

40 MATRICE TELEPHONIQUE   COUPLEUR   MATRICE A LARGE BANDE 41

43   42   4   44

FIG.3   5

P. lignes à large bande

570 58   59   SOURCES

DEMODULATEUR   53 IMAGES

57   image

INTERFACE DIDON   571   52   son   données

UNITE DE COMMANDE

1coaxial   54 SONS

DEMODULATEUR

INTERFACE DIDON

N<P 2fils   MODEM

55   MODEM   56

N lignes téléphoniques

51 CODEUR DECODEUR ANTIOPE   50 DONNEES

64 (FIG.5)

1

FIG.2

# FIG.4

Communications visiophoniques
et vidéos    Q < M

Lignes téléphoniques locales

MATRICE TELEPHONIQUE   40

COUPLEUR   42

MATRICE A LARGE BANDE   41

2 coaxiaux

M-P lignes locales à large bande   3

55

2 fils

BANQUE D'IMAGES   5

57

2 coaxiaux

N < P

P

# FIG.5

Lignes téléphoniques locales 2

Communications visiophoniques Q < M

Communications vidéos

M lignes locales à large bande 3

MATRICE TELEPHONIQUE   40

COUPLEUR   42

MATRICE A LARGE BANDE   41

410

2 coaxiaux

62

COUPLEUR   61

63

MATRICE A LARGE BANDE   6

64

55

2 fils

BANQUE D'IMAGES   5

57

4

N < P

P

2 coaxiaux

65

43

44

# FIG.6